# EUROPÄISCHE PATENTSCHRIFT

(11) **EP 3 262 321 B1**
(45) Veröffentlichungstag und Bekanntmachung des Hinweises auf die Patenterteilung: **02.06.2021**
(21) Anmeldenummer: 16701498.4
(22) Anmeldetag: 26.01.2016
(51) Int. Cl.: F16H 59/02, B60W 30/18, F16H 59/10

(54) **FAHRZEUG MIT EINEM AUTOMATIKGETRIEBE UND EINEM VON HAND BETÄTIGBAREN WÄHLELEMENT**
VEHICLE HAVING AN AUTOMATIC TRANSMISSION AND A MANUALLY ACTUATABLE SELECTOR ELEMENT
VÉHICULE ÉQUIPÉ D'UNE BOÎTE DE VITESSES AUTOMATIQUE ET D'UN ÉLÉMENT DE SÉLECTION À ACTIONNEMENT MANUEL

(30) Priorität: 26.02.2015 DE 102015203409
(43) Veröffentlichungstag der Anmeldung: 03.01.2018
(73) Patentinhaber: Bayerische Motoren Werke Aktiengesellschaft, 80809 München (DE)
(72) Erfinder: RÖLLE, Christopher, 82194 Gröbenzell (DE); FRANZ, Gunnar, 85521 Ottobrunn (DE); SOROKIN, Lenja, 81543 München (DE)
(86) Internationale Anmeldenummer: PCT/EP2016/051482
(87) Internationale Veröffentlichungsnummer: WO 2016/134899

(56) Entgegenhaltungen:
- WO-A1-2014/029492
- WO-A1-2015/024708
- WO-A2-2013/034347
- DE-A1-102006 028 045
- DE-A1-102007 029 594
- DE-A1-102010 029 184
- DE-A1-102012 207 644
- DE-A1-102013 008 605
- DE-A1-102013 216 367

## Beschreibung

Die vorliegende Erfindung betrifft ein Fahrzeug gemäß dem Oberbegriff des Patentanspruches 1.

Ein derartiges Fahrzeug ist aus der DE 10 2013 216 367 A1 bekannt. Zum technischen Hintergrund der Erfindung zählen die DE 10 2010 029 184 A1, DE 10 2007 029 594 A1, DE 10 2006 028 045 A1, DE 10 2012 207 644 A1, DE 10 2013 008 605 A1, WO 2013/034347 A2, WO 2014/029492 A1, WO 2013/034 347 A2, WO2015/024708 A1 und die WO 2014/029 492 A1.

Fahrzeuge der Marke BMW mit Automatikgetriebe weisen einen im Bereich der Mittelkonsole angeordneten Wählhebel auf. In einer ersten Stellung des Wählhebels können die einzelnen in einer ersten Schaltgasse hintereinander liegenden Betriebsmodi des Automatikgetriebes (Rückwärtsfahren, Neutral, Vorwärtsfahren) angewählt werden. Durch "nach links Verschwenken" des Wählhebels kann in einen Sportmodus geschaltet werden, indem die einzelnen Gänge bis zu höheren Drehzahlen ausgedreht werden und der Fahrer durch nach vorne Verschwenken bzw. nach hinten (entgegen der Fahrtrichtung) Verschwenken des Wählhebels das Getriebe "manuell" in einen niedrigeren Gang bzw. in einen höheren Gang schalten kann. Aufgabe der Erfindung ist es, ein Fahrzeug mit einem Automatikgetriebe und einem Wählhebel zu schaffen, der gegenüber bekannten Wählhebeln eine erweiterte bzw. modifizierte Funktionalität aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Automatikgetriebe und einem von Hand betätigbaren Wählelement, das zum Anwählen einer Gruppe von Betriebsmodi des Automatikgetriebes vorgesehen ist. "Anwählen" ist hier insbesondere im Sinne von "ansteuern" zu verstehen, d.h. der Wählhebel ist nicht mechanisch mit dem Automatikgetriebe, sondern lediglich elektrisch mit einem Getriebesteuergerät verbunden, welches einzelne Aktuatoren ansteuert, die zum Schalten einzelner Getriebegänge vorgesehen sind.

Der Kern der Erfindung besteht darin, dass das Wählelement zusätzlich dazu vorgesehen ist, das Fahrzeug von einem Betriebsmodus "nicht-hochautomatisiertes Fahren" in einen Betriebsmodus "hochautomatisiertes Fahren" zu schalten, oder umgekehrt.

"Manuelles Fahren" ist das Fahren, wie wir es heute kennen. Der Fahrer bedient das Fahrzeug in Bezug auf dessen Längs- und Querführung, sowie in Bezug auf weitere Funktionen. Auch wenn durch Fahrerassistenzsysteme, die Längs- und Querführung unterstützt bzw teilweise auch übernommen werden kann, bleibt der Fahrer für das System verantwortlich und ihm obliegt die Überwachung aller wesentlichen Regelfunktionen. Der wichtige Punkt hierbei ist die juristische Verantwortlichkeit für die sichere Fahrzeugführung, die immer noch, trotz aller Assistenzsysteme, beim Fahrer verbleibt.

Am anderen "Ende der Skala" ist das autonomen Fahren einzuordnen. Zwischen manuellem Fahren und autonomen Fahren ist das hochautomatisierte Fahren einzuordnen.

Bei hochautomatisierte Fahren ist ein zeitweiser Übergang der Verantwortung an die Regelungstechnik möglich. Die Systeme der Fahrzeugführung sind dann ausgelegt, dass sie für eine bestimmte Zeit in einer definierten Umgebung (z.B. Autobahnen) die Verantwortung übernehmen kann. Der Fahrer ist dann auch nicht mehr zur Überwachung der Regelfunktionen verpflichtet. Da aber immer noch technolgiebedingt Situationen entstehen können (z.B. Ausfall der Sensorik, unübersichtliche Verkehrssituationen, etc.) kann das System die Verantwortung auch an den Fahrer zurückgeben. Damit dies geschehen kann, muss gewährleistet sein, dass der Fahrer in einem Zeitfenster von 5-7 Sekunden (Stand der wissenschaftlichen Forschung Ende 2014) die Fahraufgabe wieder übernehmen muss (d.h. kein Schlafen oder Verlassen des Fahrersitzes erlaubt).

Der Betriebsmodus "hochautomatisiertes Fahren" zeichnet sich also dadurch aus, dass der Fahrer die Fahraufgabe zumindest für einen definierten Zeitraum und in festgelegten Situationen nicht kontinuierlich überwachen muss (im Unterschied zum Fahren mit den heute verfügbaren Fahrerassistenzfunktionen). Der Fahrer muss jedoch in der Lage bleiben, die Fahraufgabe in "angemessener" Zeit wieder übernehmen zu können. Gemäß der Erfindung wird der Betriebsmodus "hochautomatisiertes Fahren" vom Betriebsmodus "nicht-automatisiertes Fahren" auch dadurch unterschieden, dass das Fahrzeug im Betriebsmodus "hochautomatisiertes Fahren" eine über ein Navigationssystem eingegebene Fahrstrecke vollautomatisch fährt, wobei das Fahrzeug über eine elektronische Regeleinrichtung beschleunigt und gebremst und automatisch gelenkt wird.

In Abgrenzung zum hochautomatisierten Fahren ist beim autonomen Fahren die Technologie so ausfallsicher, dass eine plötzliche Übernahme der Fahraufgabe durch den Fahrer nicht mehr erforderlich wird, so dass diese Art der Mobilität, dann eher dem Zugfahren, als dem Autofahren gleicht.

Gemäß der Erfindung umfasst die oben erwähnte "Gruppe von Betriebsmodi" die Betriebsmodi "Fahren", "Neutral" und "Rückwärtsfahren". Gemäß einer Weiterbildung der Erfindung zeichnen sich die besagten Modi durch nachfolgende Merkmale aus, nämlich Betriebsmodus "Fahren", indem einzelne Gänge des Automatikgetriebes gesteuert durch eine Getriebesteuerelektronik geschaltet werden, Betriebsmodus "Neutral", indem ein Kraftschluss zwischen einem Eingang und einem Ausgang des Automatikgetriebes, d.h. zwischen einer Eingangswelle und einer Ausgangswelle des Automatikgetriebes, unterbrochen ist, und Betriebsmodus "Rückwärtsfahren", indem das Automatikgetriebe in einen Rückwärtsfahrgang geschaltet ist.

Gemäß der Erfindung weist das Wählelement mindestens eine erste Stellung bzw. mindestens einen ersten Zustand auf, die bzw. der dem Betriebsmodus "nicht-hochautomatisiertes Fahren" zugeordnet ist.

Gemäß der Erfindung ist vorgesehen, dass das Wählelement mindestens eine zweite Stellung oder mindestens einen zweiten Zustand aufweist, die bzw. der dem Betriebsmodus hochautomatisiertes Verfahren zugeordnet ist, wobei sich die mindestens eine erste, dem Betriebsmodus nicht-hochautomatisiertes Verfahren zugeordnete Stellung von der mindestens einen zweiten, den Betriebsmodus hochautomatisiertes Verfahren zugeordneten Stellung unterscheidet.

Wenn von der mindestens einen ersten Stellung und der mindestens einen zweiten Stellung die Rede ist, können damit stabile mechanische Stellungen gemeint sein, die sich voneinander unterscheiden. Dies muss aber nicht zwingend der Fall sein. Denkbar ist auch, dass die mindestens eine erste Stellung eine monostabile Stellung ist, derart, dass das Wählelement nach dem Auslenken von Hand von der ersten Stellung in die zweite Stellung sich selbsttätig in die mindestens eine erste Stellung zurück bewegt.

Gemäß der Erfindung ist vorgesehen, dass, wenn sich das Wählelement in der mindestens einer ersten Stellung oder dem mindestens einen ersten Zustand befindet, das Fahrzeug sich in dem Betriebszustand "nicht-hochautomatisiertes Verfahren" und das Automatikgetriebe im Betriebsmodus "Fahren" oder "Neutral" oder "Rückwärtsfahren" befindet Ähnlich wie bei einem herkömmlichen Fahrzeug mit Automatikgetriebe ist gemäß der Erfindung vorgesehen, dass das Automatikgetriebe aus der mindestens einen ersten Stellung des Wählelements heraus durch Auslenken des Wählelements in Richtung einer ersten Betätigungsgasse zwischen den Betriebsmodi Fahren, Neutral oder Rückwärtsfahren umschaltbar ist. Die erste Betätigungsgasse kann z.B. parallel zu einer Längsrichtung des Fahrzeugs verlaufen.

Sofern es sich bei der mindestens einen ersten Stellung um eine monostabile Stellung handelt, kann vorgesehen sein, dass aus dem Betriebsmodus Fahren heraus durch Verschwenken des Wählelements in einer ersten Richtung der Betätigungsgasse in den Zustand Neutral geschaltet werden kann. Ferner kann vorgesehen sein, dass durch Überdrücken eines Druckpunkts, d.h. durch weiteres Verschwenken des Wählelements in derselben Richtung (d.h. ohne dass das Wählelement zunächst wieder in die monostabile Stellung zurückverschwenkt werden muss) direkt in den Betriebsmodus Rückwärtsfahren geschaltet werden kann.

Ferner kann vorgesehen sein, dass aus dem Betriebsmodus "Rückwärtsfahren" heraus durch entgegengesetztes Verschwenken des Wählelements in der Betätigungsgasse in den Betriebsmodus Neutral bzw. durch Überdrücken eines Druckpunkts des Wählelements, d.h. durch weiteres Verschwenken des Wählelements, direkt in den Betriebsmodus Fahren geschaltet werden kann.

Gemäß der Erfindung ist vorgesehen, dass das Automatikgetriebe, aus der dem Betriebsmodus nicht-hochautomatisiertes Fahren zugeordneten mindestens einen ersten Stellung heraus durch Auslenken des Wählelements in einer (Schwenk-)Richtung quer zu der ersten Betätigungsgasse, in die dem Betriebsmodus hochautomatisiertes Fahren zugeordnete mindestens eine zweite Stellung umschaltbar ist.

Mit anderen Worten kann das Automatikgetriebe im Betriebsmodus nicht-hochautomatisiertes Verfahren durch nach vorne bzw. nach hinten Verschwenken des Wählelements zwischen den Betriebsmodi Fahren, Neutral oder Rückwärtsfahren umgeschaltet werden und durch Verschwenken des Wählelements z.B. in Fahrzeugquerrichtung nach rechts oder in Fahrzeugquerrichtung nach links in den Betriebsmodus hochautomatisiertes Fahren geschaltet werden.

Das Wählelement gemäß der Erfindung kann im Bereich einer Mittelkonsole des Fahrzeugs angeordnet sein. Dies muss aber nicht zwingend der Fall sein. Prinzipiell wäre es auch denkbar, dass das Wählelement vergleichbar einem Blinkerhebel oder einem "Scheibenwischerhebel" seitlich von der Lenksäule abstehend angeordnet ist.

Wenn es sich bei der mindestens einen zweiten Stellung des Wählelements um eine mechanisch stabile Stellung handelt, kann vorgesehen sein, dass das Wählelement aus der mindestens einen zweiten Stellung heraus in Richtung einer zweiten Betätigungsgasse bewegbar ist. Die zweite Betätigungsgasse kann parallel zur ersten Betätigungsgasse (z.B. parallel zur Fahrzeuglängsrichtung) verlaufen.

Nach einer Weiterbildung der Erfindung ist vorgesehen, dass durch Bewegen des Wählelements in der zweiten Betätigungsgasse vorgegebene Funktionen des Fahrzeugbetriebsmodus hochautomatisiertes Fahren anwählbar sind. Beispielsweise kann durch Bewegen (z.B. Verschwenken) des Wählelements in der zweiten Betätigungsgasse der Fahrer ein Signal an eine elektronische Regelungsvorrichtung geben, dass ein Überholvorgang eingeleitet werden soll.

Nach einer Weiterbildung der Erfindung ist vorgesehen, dass das Automatikgetriebe aus der mindestens einen ersten Stellung heraus durch Auslenken des Wählelements in einer Richtung quer zu der ersten Betätigungsgasse in eine dritte Stellung bzw. in einen dritten Zustand umschaltbar ist. Ferner kann vorgesehen sein, dass durch Bewegen des Wählelements aus der dritten Stellung bzw. dem dritten Zustand heraus in einer zur ersten Betätigungsgasse parallelen dritten Betätigungsgasse des Wählelements das Automatikgetriebe von einem aktuellen Gang in einen nächsthöheren Gang bzw. in einen nächstniedrigeren Gang umschaltbar ist. Dieser Fahrzeugbetriebsmodus kann als Sportmodus ausgelegt sein, indem das Automatikgetriebe "manuell", d.h. durch Betätigen bzw. Verschwenken des Wählelements in der dritten Betätigungsgasse hochschaltbar bzw. zurückschaltbar ist.

Sofern es sich bei dem Wählelement um ein vollständig monostabiles Wählelement handelt, kann vorgesehen sein, dass die mindestens eine erste Stellung der mindestens einen zweiten Stellung und der ggf. mindestens einer dritten Stellung entspricht und dass auch die erste Betätigungsgasse und die zweite Betätigungsgasse bzw. die ggf. vorhandene dritte Betätigungsgasse identisch sind.

Im Folgenden wird die Erfindung im Zusammenhang mit der Zeichnung näher erläutert. Es zeigen:
- Fig.1: ein erstes Ausführungsbeispiel gemäß der Erfindung in schematischer Darstellung; und
- Fig. 2: ein zweites Ausführungsbeispiel gemäß der Erfindung in schematischer Darstellung.

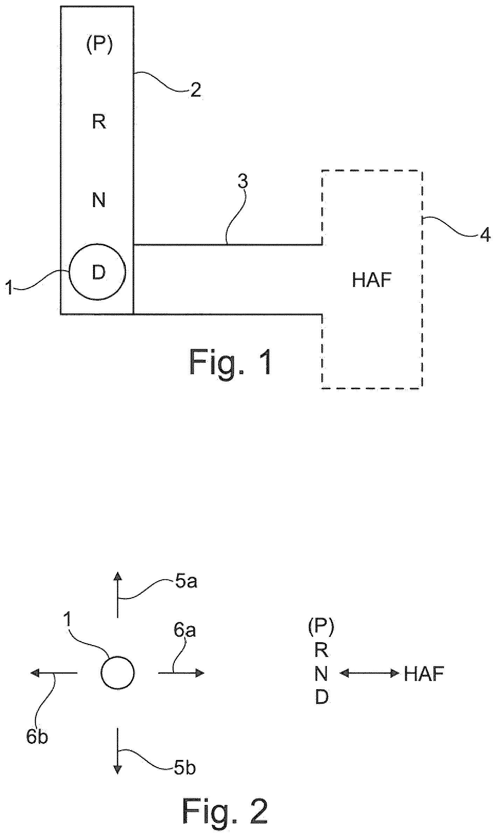

Fig. 1 zeigt ein "Schaltgassenschema" eines Fahrzeugs mit Automatikgetriebe, wobei das Fahrzeug wahlweise in einem Betriebsmodus "nicht-hochautomatisiertes Fahren" bzw. "hochautomatisiertes Fahren" betreibbar ist.

Mittels eines hier nur äußerst schematisch dargestellten Wählelements 1 kann im Fahrzeugbetriebsmodus "nicht-hochautomatisiertes Fahren" zwischen einzelnen Getriebebetriebsmodi D, N, R umgeschaltet werden, wobei der Getriebebetriebsmodus D der Vorwärtsfahrmodus ist, N der Neutralzustand ist, indem der Kraftfluss zwischen einer Eingangswelle und einer Ausgangswelle des Automatikgetriebes unterbrochen ist und R der Rückwärtsfahrmodus ist.

An dem Wählelement kann ein Bedienelement, z.B. ein Taster vorgesehen sein, durch dessen Betätigung das Automatikgetriebe in einen Parkzustand (P) schaltbar ist. Alternativ dazu kann vorgesehen sein, dass der Parkzustand durch Bewegen des Wählelements in eine zugeordnete Parkstellung P einlegbar ist.

Wie bereits erwähnt, kann zwischen den einzelnen Getriebebetriebsmodi R, N, D und ggf. P durch Bewegen (z.B. durch Verschwenken) des Wählhebels in einer ersten Schaltgasse 2, umgeschaltet werden. Die erste Schaltgasse 2 kann z.B. parallel zu einer Längsrichtung des Fahrzeugs sein.

Befindet sich das Fahrzeug im Betriebsmodus "nicht-hochautomatisiertes Fahren" in einem der Getriebebetriebsmodi R, N, D bzw. ggf. P so kann durch Verschwenken des Wählelements 1 in einer Richtung 3, die quer zur ersten Betätigungsgasse 2 ist, in einen Fahrzeugbetriebsmodus "hochautomatisiertes Fahren" (abgekürzt HAF) geschaltet werden.

Es kann vorgesehen sein, dass, wie in Fig. 1 angedeutet, der Wählhebel 1 mindestens zwei stabile Stellungen aufweist, nämlich mindestens eine stabile Stellung in der ersten Betätigungsgasse 2 und eine zweite stabile Stellung, die dem Fahrzeugbetriebsmodus hochautomatisiertes Fahren HAF zugeordnet ist.

Befindet sich das Wählelement in seiner "rechten Stellung", die dem Fahrzeugbetriebsmodus hochautomatisiertes Fahren HAF zugeordnet ist, so kann vorgesehen sein, dass der Wählhebel in einer zweiten Betätigungsgasse 4 betätigbar ist. In dem in Fig. 1 gezeigten Ausführungsbeispiel ist die zweite Betätigungsgasse 4 parallel zur ersten Betätigungsgasse 2, d.h. parallel zu einer Fahrzeuglängsrichtung. Es kann vorgesehen sein, dass durch Bewegen des Wählelements 1 in der zweiten Betätigungsgasse 4, d.h. durch nach vorne Verschwenken oder nach hinten Verschwenken des Betätigungselements 1 in der zweiten Betätigungsgasse vorgegebene Funktionen des Fahrzeugbetriebsmodus hochautomatisiertes Verfahren anwählbar sind. Beispielsweise kann vorgesehen sein, dass durch nach vorne Verschwenken des Wählelements 1 in der zweiten Betätigungsgasse 4 ein Signal gegeben werden kann, dass der Fahrer einen Überholvorgang wünscht, der dann von einer Regelelektronik vollautomatisiert auszuführen ist.

Beim Ausgangsbeispiel der Fig. 2 ist schematisiert ein Wählelement 1 dargestellt, das vollständig monostabil ausgebildet ist. D.h. nach jeder Auslenkung des Wählelements 1 kehrt dieses selbsttätig in seine in Fig. 2 gezeigte "Ruhestellung" zurück.

Befindet sich das Fahrzeug im Fahrzeugbetriebsmodus nicht-hochautomatisiertes Fahren, so kann durch Verschwenken des Wählelements 1 in Richtung der Längsachse des Fahrzeugs, d.h. in Richtung der Pfeile 5a, 5b zwischen den einzelnen Automatikgetriebemodi (P), R, N, D umgeschaltet werden, was dem Fahrzeugbetriebsmodus nicht-hochautomatisiertes Fahren entspricht. Ausgehend von diesem Fahrzeugbetriebsmodus kann durch Verschwenken des Wählelements nach rechts, d.h. in Richtung des Pfeils 6a kann in den Fahrzeugbetriebsmodus hochautomatisiertes Fahren HAF umgeschaltet werden. Alternativ dazu könnte natürlich auch vorgesehen sein, dass durch Verschwenken nach links, d.h. in Richtung des Pfeils 6b in den Fahrzeugbetriebsmodus hochautomatisiertes Fahren geschaltet werden kann.

## Patentansprüche

1. Fahrzeug, mit
- einem Automatikgetriebe und
- einem von Hand betätigbaren Wählelement (1), das zum Anwählen einer Gruppe von Betriebsmodi (P, R, N, D) des Automatikbetriebs vorgesehen ist, wobei das Wählelement (1) mindestens eine erste Stellung aufweist, die einem Fahrzeugbetriebsmodus nicht-hochautomatisiertes Fahren zugeordnet ist, wobei aus der mindestens einen ersten Stellung heraus durch Auslenken des Wählelements (1) in Richtung einer parallel zu einer Längsrichtung des Fahrzeugs verlaufenden ersten Betätigungsgasse das Automatikgetriebe zwischen Betriebsmodi Fahren, Neutral oder Rückwärtsfahren umschaltbar ist,
und das Wählelement (1) mindestens eine zweite Stellung aufweist, wobei sich die mindestens eine erste Stellung von der mindestens einen zweiten Stellung unterscheidet,
**dadurch gekennzeichnet, dass**
das Wählelement (1) ein Wählelement zum Schalten des Fahrzeugs
von dem Fahrzeugbetriebsmodus nicht-hochautomatisiertes Fahren
in einen Fahrzeugbetriebsmodus hochautomatisiertes Fahren, in dem das Fahrzeug eine über ein Navigationssystem eingegebene Fahrstrecke vollautomatisch fährt, wobei das Fahrzeug automatisch über eine elektronische Regeleinrichtung beschleunigt und gebremst und automatisch gelenkt wird und der Fahrer die Fahraufgabe zumindest für einen definierten Zeitraum und in festgelegten Situationen nicht kontinuierlich überwachen muss,
oder umgekehrt, ist,
wobei die mindestens eine zweite Stellung dem Fahrzeugbetriebsmodus hochautomatisiertes Fahren zugeordnet ist,wobei das Wählelement (1) in einer Fahrzeugquerrichtung verschwenkbar angeordnet ist, wobei durch Verschwenken des Wählelements(1) in der Fahrzeugquerrichtung vom Fahrzeugbetriebsmodus nicht-hochautomatisiertes Fahren in den Fahrzeugbetriebsmodus hochautomatisiertes Fahren geschaltet werden kann.

2. Fahrzeug nach Anspruch 1, **dadurch gekennzeichnet, dass** die Gruppe von Betriebsmodi
- den Betriebsmodus Fahren umfasst, indem einzelne Gänge des Automatikgetriebes gesteuert durch eine Getriebesteuerelektronik geschaltet werden,
- den Betriebsmodus Neutral, indem ein Kraftschluss zwischen einem Eingang und einem Ausgang des Automatikgetriebes unterbrochen ist, und
- den Betriebsmodus Rückwärtsfahren, indem das Automatikgetriebe in einen Rückwärtsfahrgang geschaltet ist, umfasst.

3. Fahrzeug nach Anspruch 1 oder 2, **dadurch gekennzeichnet, dass** die mindestens eine erste Stellung eine monostabile Stellung ist, derart, dass das Wählelement nach einem Auslenken von Hand in die mindestens eine zweite Stellung selbsttätig in die mindestens eine erste Stellung zurück kehrt.

4. Fahrzeug nach einem der Ansprüche 1 bis 3, **dadurch gekennzeichnet, dass** die mindestens eine erste Stellung und die zweite Stellung jeweils stabile Stellungen sind, in denen das Wählelement unbetätigt verbleiben kann.

5. Fahrzeug nach einem der Ansprüche 1 bis 4, **dadurch gekennzeichnet, dass** das Wählelement im Bereich einer Mittelkonsole des Fahrzeugs angeordnet ist.

6. Fahrzeug nach einem der Ansprüche 1 bis 5, **dadurch gekennzeichnet, dass** das Wählelement (1) aus der mindestens einen zweiten Stellung heraus in Richtung einer zweiten Betätigungsgasse (4), die parallel zur ersten Betätigungsgasse (2) ist, bewegbar ist.

7. Fahrzeug nach Anspruch 6, **dadurch gekennzeichnet, dass** durch Bewegen des Wählelements (1) in der zweiten Betätigungsgasse (4) vorgegebene Funktionen des Fahrzeugbetriebsmodus hochautomatisiertes Fahren anwählbar sind.

8. Fahrzeug nach Anspruch 7, **dadurch gekennzeichnet, dass** durch Bewegen des Wählelements (1) in der zweiten Betätigungsgasse ein Signal zum Einleiten eines Überholvorgangs erzeugbar ist.

9. Fahrzeug nach einem der vorangehenden Ansprüche, **dadurch gekennzeichnet, dass** das Automatikgetriebe aus der mindestens einen ersten Stellung heraus durch Auslenken des Wählelements (1) in einer Richtung quer zu der ersten Betätigungsgasse (2) in eine dritte Stellung umschaltbar ist.

10. Fahrzeug nach Anspruch 9, **dadurch gekennzeichnet, dass** durch Bewegen des Wählelements aus der dritten Stellung heraus in einer zur ersten Betätigungsgasse (2) parallelen dritten Betätigungsgasse das Automatikgetriebe von einem aktuellen Gang in einen nächsthöheren Gang bzw. in einen nächstniedrigeren Gang schaltbar ist.

## Claims

1. Vehicle, with
- an automatic transmission, and
- a selector element (1) which can be actuated by hand and is provided for the selection of a group of operating modes (P, R, N, D) of the automatic operation,
the selector element (1) having at least one first position which is assigned to a non-highly automated driving vehicle operating mode, it being possible for the automatic transmission to be switched between driving, neutral or reverse operating modes out of the at least one first position by way of deflection of the selector element (1) in the direction of a first actuating gate which runs parallel to a longitudinal direction of the vehicle,
and the selecting element (1) having at least one second position, the at least one first position differing from the at least one second position,
**characterized in that**
the selector element (1) is a selector element for shifting the vehicle from the non-highly automated driving vehicle operating mode into a highly automated driving vehicle operating mode, in which the vehicle drives in a fully automatic manner along a route which is input via a navigation system, the vehicle being accelerated and braked automatically via an electronic regulating device and being steered automatically, and it not being necessary for the driver to continuously monitor the driving task, at least for a defined time period and in fixed situations, or conversely (for shifting the vehicle from the highly automated driving vehicle operating mode into the non-highly automated driving vehicle operating mode),
the at least one second position being assigned to the highly automated driving vehicle operating mode, the selector element (1) being arranged such that it can be pivoted in a vehicle transverse direction, it being possible by way of pivoting of the selector element (1) in the vehicle transverse direction for shifting to be carried out from the non-highly automated driving vehicle operating mode into the highly automated driving vehicle operating mode.

2. Vehicle according to Claim 1, **characterized in that** the group of operating modes
- comprises the driving operating mode, in which individual gears of the automatic transmission are shifted in a controlled manner by way of transmission control electronics,
- comprises the neutral operating mode, in which a non-positive connection between an input and an output of the automatic transmission is interrupted, and
- comprises the reverse operating mode, in which the automatic transmission is shifted into reverse gear.

3. Vehicle according to Claim 1 or 2, **characterized in that** the at least one first position is a monostable position in such a way that, after a deflection by hand into the at least one second position, the selector element returns automatically into the at least one first position.

4. Vehicle according to one of Claims 1 to 3, **characterized in that** the at least one first position and the second position are in each case stable positions, in which the selector element can remain in a non-actuated manner.

5. Vehicle according to one of Claims 1 to 4, **characterized in that** the selector element is arranged in the region of a centre console of the vehicle.

6. Vehicle according to one of Claims 1 to 5, **characterized in that** the selector element (1) can be moved out of the at least one second position in the direction of a second actuating gate (4) which is parallel to the first actuating gate (2).

7. Vehicle according to Claim 6, **characterized in that** predetermined functions of the highly automated driving vehicle operating mode can be selected by way of movement of the selector element (1) in the second actuating gate (4) .

8. Vehicle according to Claim 7, **characterized in that** a signal for the initiation of an overtaking operation can be generated by way of movement of the selector element (1) in the second actuating gate.

9. Vehicle according to one of the preceding claims, **characterized in that** the automatic transmission can be switched over from the at least one first position into a third position by way of deflection of the selector element (1) in a direction transversely with respect to the first actuating gate (2).

10. Vehicle according to Claim 9, **characterized in that** the automatic transmission can be shifted from a current gear into a next higher gear or into a next lower gear by way of movement of the selector element out of the third position in a third actuating gate which is parallel to the first actuating gate (2).

## Revendications

1. Véhicule, comprenant
- une transmission automatique et
- un élément de sélection à commande manuelle (1) qui est prévu pour sélectionner un groupe de modes de fonctionnement (P, R, N, D) du mode automatique, l'élément de sélection (1) comportant au moins une première position qui est associée à un mode de fonctionnement de véhicule conduite non-hautement automatisée, la transmission automatique pouvant être commutée entre des modes de fonctionnement conduite, neutre ou marche arrière à partir de l'au moins une première position par déviation de l'élément de sélection (1) en direction d'une première voie d'actionnement parallèle à une direction longitudinale du véhicule,
et l'élément de sélection (1) comportant au moins une deuxième position, l'au moins une première position étant différente de l'au moins une deuxième position, **caractérisé en ce que**
l'élément de sélection (1) est un élément de sélection destiné à faire passer le véhicule du mode de fonctionnement de véhicule conduite non-hautement automatisée dans un mode de fonctionnement de véhicule conduite hautement automatisée dans lequel le véhicule parcourt de manière entièrement automatique un itinéraire entré par le biais d'un système de navigation, le véhicule accélérant et freinant automatiquement par le biais d'un dispositif de régulation électronique et étant dirigé de manière automatique et le conducteur n'ayant pas besoin de surveiller en permanence la tâche de conduite au moins pendant un intervalle de temps défini et dans des situations spécifiées,
ou inversement,
l'au moins une deuxième position étant associée au mode de fonctionnement de véhicule conduite hautement automatisée, l'élément de sélection (1) étant disposé de manière à pouvoir pivoter dans une direction transversale du véhicule, la commutation du mode de fonctionnement de véhicule conduite non hautement automatisée dans le mode de fonctionnement de véhicule conduite hautement automatisée pouvant être effectuée par pivotement de l'élément de sélection (1) dans la direction transversale du véhicule.

2. Véhicule selon la revendication 1, **caractérisé en ce que** le groupe de modes de fonctionnement comprend
- le mode de fonctionnement conduite dans lequel des rapports individuels de la transmission automatique sont commutés de manière commandée par l'électronique de commande de transmission,
- le mode de fonctionnement neutre dans lequel une liaison en force entre une entrée et une sortie de la transmission automatique est interrompue, et
- le mode de fonctionnement marche arrière dans lequel la transmission automatique est commutée en marche arrière.

3. Véhicule selon la revendication 1 ou 2, **caractérisé en ce que** l'au moins une première position est une position monostable de sorte que l'élément de sélection revient automatiquement dans l'au moins une première position après avoir été dévié à la main dans l'au moins une deuxième position.

4. Véhicule selon l'une des revendications 1 à 3, **caractérisé en ce que** l'au moins une première position et la deuxième position sont chacune des positions stables dans lesquelles l'élément de sélection peut rester sans être actionné.

5. Véhicule selon l'une des revendications 1 à 4, **caractérisé en ce que** l'élément de sélection est disposé au niveau d'une console centrale du véhicule.

6. Véhicule selon l'une des revendications 1 à 5, **caractérisé en ce que** l'élément de sélection (1) peut être déplacé de l'au moins une deuxième position en direction d'une deuxième voie d'actionnement (4) parallèle à la première voie d'actionnement (2).

7. Véhicule selon la revendication 6, **caractérisé en ce que** des fonctions spécifiées du mode de fonctionnement de véhicule conduite hautement automatisée peuvent être sélectionnées par déplacement de l'élément de sélection (1) dans la deuxième voie d'actionnement (4).

8. Véhicule selon la revendication 7, **caractérisé en ce qu'**un signal de déclenchement d'un processus de dépassement peut être généré par déplacement de l'élément de sélection (1) dans la deuxième voie d'actionnement.

9. Véhicule selon l'une des revendications précédentes, **caractérisé en ce que** la transmission automatique peut être commutée de l'au moins une première position dans une troisième position par déviation de l'élément de sélection (1) dans une direction transversale à la première voie d'actionnement (2).

10. Véhicule selon la revendication 9, **caractérisé en ce que** la transmission automatique peut être commutée d'un rapport actuel à un rapport immédiatement supérieur ou à un rapport immédiatement inférieur par sortie de l'élément de sélection de la troisième position dans une troisième voie d'actionnement parallèle à la première voie d'actionnement (2).
